# EUROPEAN PATENT APPLICATION

(11) **EP 4 687 191 A1**
(43) Date of publication of application: **04.02.2026**
(21) Application number: 24222815.3
(22) Date of filing: 23.12.2024
(51) Int. Cl.: H01M 10/42, H01M 10/48, H01M 50/209, H01M 50/289, H01M 50/569, H01M 50/287

(54) **ACQUISITION ASSEMBLY, BATTERY MODULE, AND BATTERY BOX**

(30) Priority: 01.08.2024 CN 202421858169 U; 24.09.2024 WO PCT/CN2024/120735
(71) Applicant: Eve Energy Co., Ltd., Huizhou, Guangdong 516006 (CN)
(72) Inventor: JIANG, Wei, Huizhou, 516006 (CN)
(74) Representative: Weickmann & Weickmann PartmbB

(57) **Abstract**

Provided are an acquisition assembly, a battery module, and a battery box. The acquisition assembly includes an insulation support (2), an acquisition wire (3), a flexible printed circuit, FPC, acquisition board (4), and a connector (5). The FPC acquisition board (4) includes an FPC acquisition body (41), a connecting portion (42), and a redundant part (43). The FPC acquisition body (41) is fixedly connected to the top of an expansion beam. The end of the acquisition wire (3) is connected to the FPC acquisition body (41). The connecting portion (42) is connected to the connector (5). Two ends of the redundant part (43) are connected to the FPC acquisition body (41) and the connecting portion (42), respectively. The connector (5) is connected to a battery management system, BMS, slave board.

## Description

### TECHNICAL FIELD

The present application relates to the field of battery technologies, for example, an acquisition assembly, a battery module, and a battery box.

### BACKGROUND

A cell contact system (CCS) is an integrated battery signal acquisition (for example, temperature acquisition, pressure acquisition, and current acquisition) and management system. The CCS is mainly formed by a plastic support, an acquisition assembly, and conductive busbars (aluminum busbars).

The CCS in which flexible flat cables (FFCs) are used as acquisition wires mainly includes a printed circuit board (PCB) acquisition board, FFC acquisition wires, connectors, and the like. The connectors and the FFC acquisition wires are welded on the PCB acquisition board, the FFC acquisition wires are connected to the connectors, and the connectors are connected to a battery management system (BMS) slave board by direct plug-in.

This form of CCS has the disadvantages. Since the PCB acquisition board at the front end of the CCS needs to be welded to the connectors and the acquisition wires, the dimension of the PCB acquisition board is larger, and a larger amplitude is prone to be generated during a vibration process, causing stress concentration on the connector pins welded on the PCB acquisition board, resulting in a risk of the acquisition failure caused by a pin breakage.

### SUMMARY

The present application provides an acquisition assembly, thereby preventing the acquisition failure caused by a breakage of welding pins between a connector and the acquisition board due to the vibration of a CCS acquisition board.

The acquisition assembly is applied to a battery module mounted in a battery box. Multiple expansion beams are arranged at intervals in the battery box. A space formed between two adjacent expansion beams is configured to accommodate the battery module, and a BMS slave board is fixedly disposed on a side of the expansion beams. The acquisition assembly includes an insulation support, acquisition wires mounted on the insulation support, a flexible printed circuit (FPC) acquisition board, and a connector. The FPC acquisition board includes an FPC acquisition body, a connecting portion, and a redundant part. The FPC acquisition body is fixedly connected to the top of the expansion beams. An end of the acquisition wire is electrically connected to the FPC acquisition body. The connecting portion is connected to the connector. Two ends of the redundant part are connected to the FPC acquisition body and the connecting portion, respectively. The connector is connected to the BMS slave board.

The present application provides a battery module using the preceding acquisition assembly, thereby improving the usage performance and stability of the entire battery module.

The battery module includes a cell and the preceding acquisition assembly, and the acquisition assembly is electrically connected to the cell.

The present application provides a battery box using the preceding battery module, thereby extending the service life of the battery box, reducing the number of maintenance times, and saving maintenance costs.

The battery box includes a box body and the preceding battery module, multiple expansion beams are arranged at intervals in the box body, a space formed between two adjacent expansion beams is configured to accommodate the battery module, a BMS slave board is fixedly disposed on the side of the expansion beam, the acquisition assembly in the battery module includes an FPC acquisition board, the FPC acquisition board is fixedly connected to the top of the expansion beams, and the connector on the acquisition assembly is connected to the BMS slave board.

The beneficial effects of the acquisition assembly provided in the present application are described below. The FPC acquisition body is fixed on the expansion beam of the box body so that the installation stability of the FPC acquisition board can be effectively improved, and the concentrated stress of the FPC acquisition board on the connector pins can be eliminated, thereby ensuring that the connector pins on the FPC acquisition board do not break and this connection manner is convenient and fast. In addition, the acquisition board made of FPC material is soft, thin and light, and bendable so that the acquisition board is deformable. When the expansion beam is bent and deformed by the expansion force of the cell, the redundant part in the FPC acquisition board can deform to absorb the deformation of the expansion beam so that the relative distance between the connector and the BMS slave board welded on the expansion beam does not change, thereby avoiding the relative displacement between the connector and the BMS slave board and also avoiding the connection failure between the connector and the BMS slave board, and thus, avoiding the acquisition failure.

The beneficial effects of the battery module provided in the present application are described below. The battery module includes the preceding acquisition assembly, and the preceding acquisition assembly has the FPC acquisition board fixedly connected to the expansion beams on the box body of the battery box. Therefore, not only the installation stability of the FPC acquisition board can be ensured, and the pin breakage of the connector on the FPC acquisition body can be avoided; but also when the expansion beam deforms, the redundant part in the FPC acquisition board can absorb the deformation so that the relative distance between the connector and the BMS slave board is kept unchanged, the connection between the connector and the BMS slave board is stable, the effective acquisition of the BMS slave board can be ensured, and the usage performance and stability of the entire battery module can be improved.

The beneficial effects of the battery box provided in the present application are described below. A space for placing the battery module is limited through the expansion beams arranged at intervals in the box body, and the FPC acquisition board in the battery module is fixedly connected to the expansion beams. The PCB hard board is replaced with the FPC acquisition board and the FPC acquisition board is fixedly connected to the expansion beams. In this manner, on the one hand, the vibration of the FPC acquisition board can be effectively reduced, and the risk of pin breakage of the connector on the FPC acquisition body due to concentrated stress can be reduced; on the other hand, when the expansion beam deforms, the redundant part on the FPC acquisition board can absorb the deformation generated by the expansion beam, thereby ensuring the stability of the relative distance between the BMS slave board and the connector, further ensuring the stability and reliability of the connection between the connector and the BMS slave board, prolonging the service life of the battery box, reducing the number of maintenance times, and saving maintenance costs.

### BRIEF DESCRIPTION OF THE DRAWINGS

FIG. 1 is a view illustrating the structure of an acquisition assembly according to an embodiment of the present application.
FIG. 2 is a front view illustrating some structures of an acquisition assembly according to an embodiment of the present application.
FIG. 3 is a partial enlarged view of part A in FIG. 1.
FIG. 4 is a top view illustrating the structure of interconnection between two acquisition assemblies according to an embodiment of the present application.
FIG. 5 is a partial enlarged view of part B in FIG. 4.

### Reference list

- 100: BMS slave board
- 10: acquisition assembly
- 1: bus bar
- 2: insulation support
- 3: acquisition wire
- 31: wire body
- 32: bent section
- 321: first bent portion
- 322: second bent portion
- 4: FPC acquisition board
- 41: FPC acquisition body
- 411: collector
- 412: collection socket
- 42: connecting portion
- 43: redundant part
- 5: connector

### DETAILED DESCRIPTION

The present application is described below in conjunction with drawings and embodiments. The embodiments described herein are intended to explain the present application and not to limit the present application. Additionally, it is to be noted that for ease of description, part, not all, of structures related to the present application are illustrated in the drawings.

In the description of the present application, unless otherwise expressly specified and limited, the term "connected to each other", "connected", or "fixed" is to be construed in a broad sense, for example, as fixedly connected, detachably connected, or integrated; mechanically connected or electrically connected; directly connected to each other or indirectly connected to each other via an intermediary; or internally connected between two elements or interaction relations between two elements. For those of ordinary skill in the art, meanings of the preceding terms in the present application may be understood according to situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, or the first feature is obliquely on, above, or over the second feature, or the first feature is simply at a higher level than the second feature. When the first feature is described as "under", "below", or "underneath" the second feature, the first feature is right under, below, or underneath the second feature, or the first feature is obliquely under, below, or underneath the second feature, or the first feature is simply at a lower level than the second feature.

In the description of this embodiment, the orientations or position relations indicated by terms such as "above", "below", "right", and the like are based on the drawings. These orientations or position relations are intended only to facilitate the description and simplify the operation and not to indicate or imply that a device or element referred to must have such specific orientations or must be configured or operated in such specific orientations. Thus, these orientations or position relations are not to be construed as limiting the present application. In addition, terms "first" and "second" are used only for distinguishing between descriptions and have no special meaning.

An acquisition assembly, a battery module, and a battery box provided in the present application are introduced below in conjunction with the drawings and embodiments.

In the related art, a battery box includes a box body and a battery module. To adapt to the expansion of the end of the battery module, multiple expansion beams are arranged at intervals in the box body, and a space for accommodating the battery module is formed between two adjacent expansion beams. The larger-area surface of the expansion beam faces the large surface of the battery module so that the expansion beam can withstand the expansion force of the battery module along the end direction (that is, the normal direction of the large surface of the battery module), thereby reducing the deformation of the battery module along the end direction. In addition, a BMS slave board 100 is fixedly disposed on the larger-area surface of the expansion beam. The battery module includes a cell and an acquisition assembly 10. The cell is electrically connected to the acquisition assembly 10. The BMS slave board 100 is electrically connected to the acquisition assembly 10 to monitor and acquire signals such as the voltage, temperature, and current of the cell.

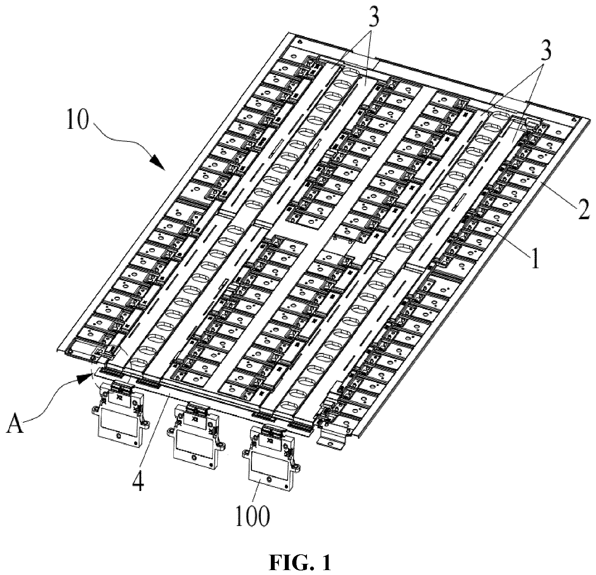

As shown in FIG. 1, the acquisition assembly 10 includes busbars 1, an insulation support 2, acquisition wires 3, acquisition boards, and connectors 5. The busbars 1 are mounted on the insulation support 2, and the insulation support 2 is configured to insulate the busbars 1 and the part of an output stage that is not electrically connected to the cell from the cell. The insulation support 2 may be made of a polycarbonate (PC) board, a PC + acrylonitrile butadiene styrene (ABS) board, an epoxy board, and the like, which are not limited in the present application. The acquisition wires 3 are mounted on the insulation support 2, an end of the acquisition wire 3 is electrically connected to the busbar 1, and the other end of the acquisition wire 3 is electrically connected to the acquisition board so that the acquired voltage, temperature, current, and other signals of the cell are transmitted to an FPC acquisition board 4. The acquisition board is usually made of a PCB hard board on which the connectors 5 and the acquisition wires 3 are welded and connected, and the connectors 5 are connected to the BMS slave board 100 to transmit the signals on the cell to the BMS.

However, since the PCB hard board needs to be welded with the connectors 5 and the acquisition wires 3, the dimension of the PCB hard board is usually larger, and a large amplitude is prone to be generated during the vibration process, causing stress concentration on the pins of the connectors 5 welded on the PCB hard board, resulting in the risk of the acquisition failure due to the pin breakage.

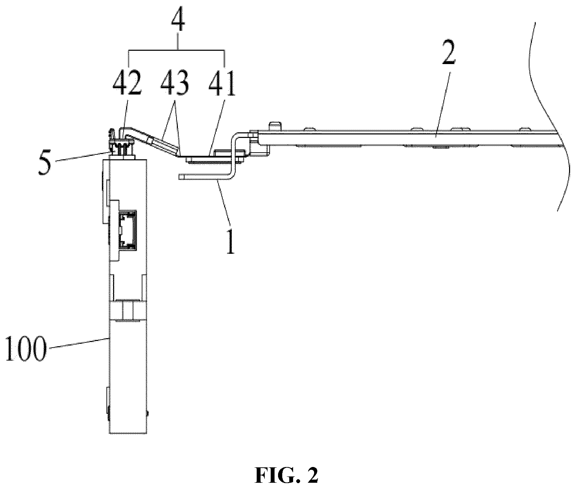

In this example, the acquisition board adopts the FPC acquisition board 4. In conjunction with FIGS. 1 and 2, the FPC acquisition board 4 includes an FPC acquisition body 41, a connecting portion 42, and a redundant part 43. The FPC acquisition body 41 is fixedly connected to the top of an expansion beam, an end of the acquisition wire 3 is welded and electrically connected to the FPC acquisition body 41, the connecting portion 42 is connected to the connector 5, and two ends of the redundant part 43 are connected to the FPC acquisition body 41 and the connecting portion 42, respectively.

In the preceding configuration, the FPC acquisition body 41 is fixed on the expansion beam of the box body. Since the expansion beam is generally fixed on the box body, the expansion beam can play a buffering role when the box body is subjected to the vibration or impact so that the interferences of external forces on the FPC acquisition body 41 can be reduced, the large amplitude generated by the FPC acquisition body 41 can be suppressed, the installation stability of the FPC acquisition body 41 can be effectively improved, and the concentrated stress of the FPC acquisition body 41 on the pins of the connector 5 can be eliminated, thereby ensuring that the pins of the connector 5 on the FPC acquisition board do not break, and this connection manner is convenient and fast.

In this example, the redundant part 43, the connecting portion 42, and the FPC acquisition body 41 are integrally formed and all made of the FPC material. The acquisition board made of the FPC material is soft, thin and light, and bendable so that the redundant part 43 is deformable. When the expansion beam is bent and deformed by the expansion force of the cell, the expansion beam moves forward along with the BMS slave board 100, the connector 5, and the connecting portion 42. At this time, the redundant part 43 can deform to absorb the deformation of the expansion beam so that the relative distance between the connector 5 and the BMS slave board 100 welded on the expansion beam does not change, thereby avoiding the relative displacement between the connector 5 and the BMS slave board 100, and also avoiding the connection failure between the connector 5 and the BMS slave board 100, and thus avoiding the acquisition failure.

The connecting portion 42 is provided with a piercing terminal connected to the connector 5 so that the FPC acquisition board 4 can be directly inserted into the plastic housing of the connector 5 for acquisition and connection, thereby eliminating the step of welding the connector 5 to the FPC acquisition body 41, simplifying the process, and reducing production costs.

The acquisition wire 3 is the FFC wire. The FFC wire has the advantages of good flexibility and thinness and has a relatively simple structure. The mold cost of the FFC wire is lower than the mold cost of the FPC wire so that the FFC wire has a cost advantage. Of course, in other examples, the acquisition wire 3 may be a flexible die-cut circuit (FDC) wire. Compared with the FPC wire, the FDC wire has fewer machining steps, a shorter machining cycle, and higher efficiency, thereby effectively saving machining costs. Therefore, both the FFC wire and the FDC wire fall within the scope of the present application.

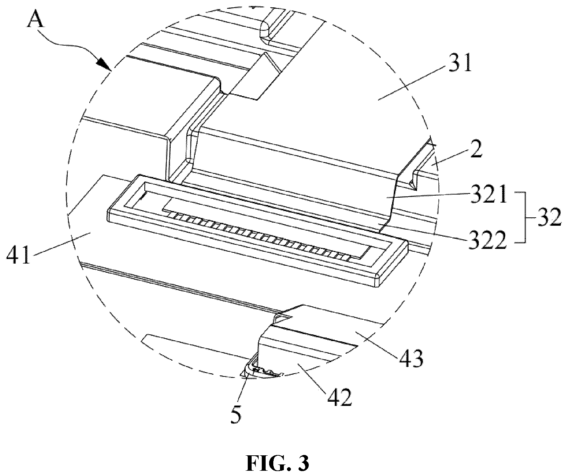

As shown in FIG. 3, the FFC wire includes a wire body 31 and a bent section 32. The wire body 31 is mounted on the insulation support 2, the bent section 32 is located at an end of the wire body 31, the bent section 32 is electrically connected to the FPC acquisition board 4, and a side of the wire body 31 may be connected to a negative temperature coefficient (NTC) assembly through a thermally conductive structural adhesive, soldering, or the like so that the temperature information at the cell pole can be acquired. The bent section 32 includes a first bent portion 321 and a second bent portion 322. An end of the first bent portion 321 is connected to the end of the wire body 31, the other end of the first bent portion 321 is connected to an end of the second bent portion 322, a larger-area side surface of the first bent portion 321 fits and abuts against an end surface of the insulation support 2, and the other end of the second bent portion 322 abuts against the FPC acquisition body 41 and is fixedly connected to the FPC acquisition body 41. In this manner, the first bent portion 321 in the acquisition wire 3 can absorb the displacement of the FPC acquisition body 41 generated when the cell expands, thereby ensuring the connection stability between the second bent portion 322 and the connector 5.

In this example, the FPC acquisition body 41 is fixedly connected to the second bent portion 322 through hot bar soldering so that the connection strength and the efficiency are high, and time and labor costs are effectively saved. Of course, in other examples, the FPC acquisition body 41 may be fixed to the second bent portion 322 through laser welding, ultrasonic welding, resistance welding, or the like, which are not limited in the present application.

An adhesive coating layer is sandwiched between the FPC acquisition body 41 and the top of the expansion beam. For example, foam glue may be used for directly bonding the FPC acquisition body 41 to the top of the expansion beam, thereby eliminating the welding step between the FBC acquisition body 41 and the top of the expansion beam and improving the production efficiency.

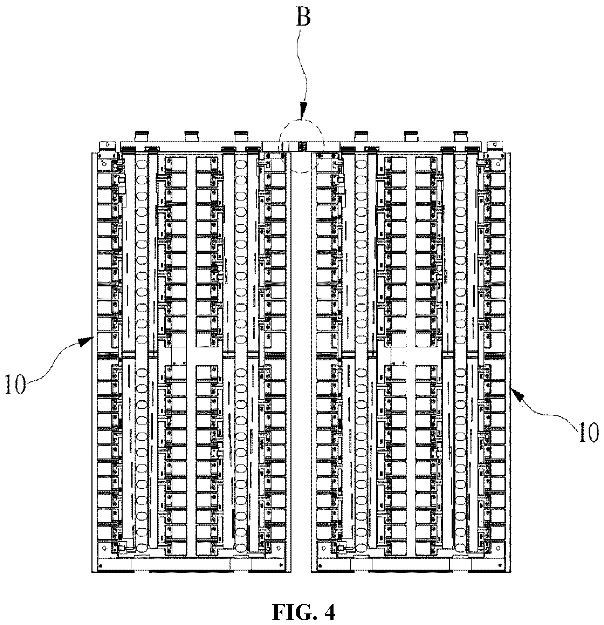

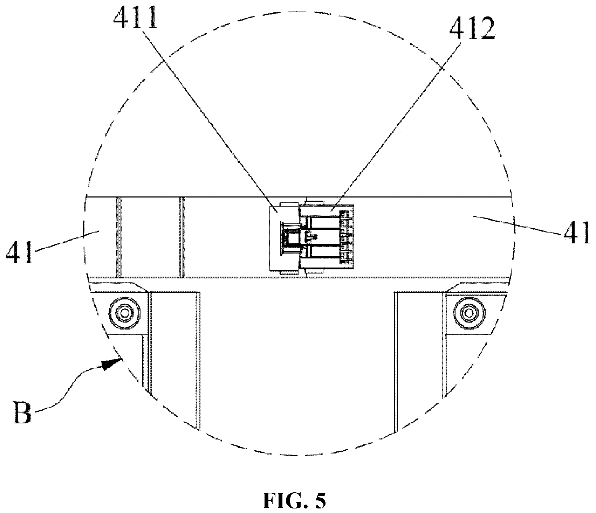

In this embodiment, in conjunction with FIGS. 4 and 5, the case where two battery modules are provided in the battery box is used as an example, a collector 411 is provided at an end of the FPC acquisition body 41 in one acquisition assembly 10, a collection socket 412 is provided at an end of the FPC acquisition body in the other acquisition assembly 10, and the collector 411 is capable of being inserted into the collection socket 412. When the BMS slave board 100 in one of the battery modules needs to acquire the working information of the cell in the other battery module, the collector 411 is directly inserted into the collection socket 412 to achieve the communication connection of the two battery modules. If the PCB hard board is used as the acquisition board and the collector 411 is disposed on the PCB hard board, since the PCB hard board has high hardness and poor toughness, the FFC wire is required as a transfer bridge connecting the two PCB hard boards. At this time, there are two more welding processes for each PCB hard board to weld the FFC wire to the PCB hard board.

Therefore, by replacing the PCB hard board with the FPC acquisition board 4, another advantage is that the difficulty of acquisition, definition and transfer of two adjacent battery modules can be reduced, the number of welding times can be significantly reduced, the process flow can be simpler, and process requirements can be reduced.

When more battery modules are provided in the battery box, both the collector 411 and the collection socket 412 are provided on the FPC acquisition body 41, thereby facilitating insertion and mating with the FPC acquisition body 41 on the adjacent acquisition assembly 10. Therefore, the present application does not limit whether both the collector 411 and the collection socket 412 are provided on the FPC acquisition body 41. The following three structures all fall within the scope of the present application: only the collector 411 is provided on the FPC acquisition body 41, only the collection socket 412 is provided on the FPC acquisition body 41, and both the collector 411 and the collection socket 412 are provided on the FPC acquisition body 41.

This embodiment further provides a battery module, the battery module includes cells and the preceding acquisition assembly 10, the insulation support 2 is provided with through holes coaxially disposed with cell poles, and the busbars 1 on the acquisition assembly 10 are electrically connected to the cell poles through the through holes. The battery module includes the preceding acquisition assembly 10, and the preceding acquisition assembly 10 has the FPC acquisition board 4 fixedly connected to the expansion beams on the box body of the battery box. Therefore, not only the installation stability of the FPC acquisition board 4 can be ensured, and the pin breakage of the connector 5 on the FPC acquisition body 41 can be avoided; but also when the expansion beam deforms, the redundant part 43 in the FPC acquisition board 4 can absorb the deformation so that the relative distance between the connector 5 and the BMS slave board 100 is kept unchanged, the connection between the connector 5 and the BMS slave board 100 is stable, the effective acquisition of the BMS slave board 100 can be ensured, and the usage performance and stability of the entire battery module can be improved.

This embodiment further provides a battery box, the battery box includes a box body and the preceding battery module, a space for placing the battery module is limited through the expansion beams arranged at intervals in the box body, and the FPC acquisition board 4 in the battery module is fixedly connected to the expansion beam. The PCB hard board is replaced with the FPC acquisition board 4 and the FPC acquisition board 4 is fixedly connected to the expansion beam. In this manner, on the one hand, the vibration of the FPC acquisition board 4 can be effectively reduced, and the risk of pin breakage of the connector 5 on the FPC acquisition body 41 due to concentrated stress can be reduced; on the other hand, when the expansion beam deforms, the redundant part 43 on the FPC acquisition board 4 can absorb the deformation generated by the expansion beam, thereby ensuring the stability of the relative distance between the BMS slave board 100 and the connector 5, further ensuring the stability and reliability of the connection between the connector 5 and the BMS slave board 100, extending the service life of the battery box, reducing the number of maintenance times, and saving maintenance costs.

In the description of the specification, the description of reference terms such as "some embodiments" and "other embodiments" is intended to mean that features, structures, materials, or characteristics described in conjunction with such embodiments or examples are included in at least one embodiment or example of the present application. In the specification, the illustrative description of the preceding terms does not necessarily refer to the same embodiment or example. Moreover, described features, structures, materials, or characteristics may be combined in an appropriate manner in any one or more embodiments or examples.

## Claims

1. An acquisition assembly, applied to a battery module, wherein the battery module is mounted in a battery box, a plurality of expansion beams arranged at intervals are provided in the battery box, a space formed between two adjacent ones of the plurality of expansion beams is configured to accommodate the battery module, and a battery management system, BMS, slave board (100) is fixedly disposed on a side of the plurality of expansion beams, wherein the acquisition assembly (10) comprises:
an insulation support (2); an acquisition wire (3) mounted on the insulation support (2); a flexible printed circuit, FPC, acquisition board (4), and a connector (5), wherein the FPC acquisition board (4) comprises an FPC acquisition body (41), a connecting portion (42), and a redundant part (43), the FPC acquisition body (41) is fixedly connected to a top of the plurality of expansion beams, an end of the acquisition wire (3) is electrically connected to the FPC acquisition body (41), the connecting portion (42) is connected to the connector (5), two ends of the redundant part (43) are connected to the FPC acquisition body (41) and the connecting portion (42), respectively, and the connector (5) is connected to the BMS slave board (100).

2. The acquisition assembly of claim 1, wherein the connecting portion (42) is provided with a piercing terminal connected to the connector (5).

3. The acquisition assembly of claim 1 or 2, wherein the acquisition wire (3) comprises a wire body (31) and a bent section (32), the wire body (31) is mounted on the insulation support (2), the bent section (32) is located at an end of the wire body (31), and the bent section (32) is electrically connected to the FPC acquisition board (4).

4. The acquisition assembly of claim 3, wherein a connection manner between the FPC acquisition board (4) and the bent section (32) comprises hot bar soldering, laser welding, ultrasonic welding, and resistance welding.

5. The acquisition assembly of any one of claims 1 to 4, wherein a foam glue layer is sandwiched between the FPC acquisition body (41) and the top of the expansion beam.

6. The acquisition assembly of any one of claims 1 to 5, wherein the acquisition wire (3) is a flexible flat cable, FFC, wire or a flexible die-cut circuit, FDC, wire.

7. The acquisition assembly of claim 6, wherein the acquisition wire (3) is the FFC wire.

8. The acquisition assembly of any one of claims 1 to 7, wherein a collector (411) is provided at an end of the FPC acquisition board (4), a collection socket (412) is provided at another end of the FPC acquisition board (4), and the collector (411) is inserted into the collection socket (412) on an adjacent FPC acquisition board (4).

9. A battery module, comprising a cell and the acquisition assembly (10) of any one of claims 1 to 8, wherein the acquisition assembly (10) is electrically connected to the cell.

10. A battery box, comprising a box body and the battery module of claim 9, wherein the plurality of expansion beams are arranged at intervals in the box body, the space formed between two adjacent ones of the plurality of expansion beams is configured to accommodate the battery module, the battery management system, BMS, slave board (100) is fixedly disposed on the side of the plurality of expansion beams, the acquisition assembly (10) in the battery module comprises the flexible printed circuit, FPC, acquisition board (4), the FPC acquisition board (4) is fixedly connected to a top of the expansion beam, and the connector (5) on the acquisition assembly (10) is connected to the BMS slave board (100).
